# EUROPÄISCHE PATENTSCHRIFT

(11) **EP 2 209 391 B1**
(45) Veröffentlichungstag und Bekanntmachung des Hinweises auf die Patenterteilung: **12.12.2012**
(21) Anmeldenummer: 08805010.9
(22) Anmeldetag: 02.10.2008
(51) Int. Cl.: A23L 1/31, A23L 1/317, A22C 7/00, A22C 11/00

(54) **VERFAHREN ZUR HERSTELLUNG VON ROHWURST IN GEFORMTEN WURSTLAIBEN**
METHOD FOR THE PRODUCTION OF RAW SAUSAGE IN MOLDED SAUSAGE LOAVES
PROCÉDÉ DE FABRICATION DE SAUCISSE CRUE EN BLOCS MOULÉS

(30) Priorität: 05.10.2007 DE 102007048125
(43) Veröffentlichungstag der Anmeldung: 28.07.2010
(73) Patentinhaber: Böklunder Plumrose GmbH & Co. KG, 24860 Böklund (DE)
(72) Erfinder: BERGT, Jörg, 49214 Bad Rothenfelde (DE); NEUKUM, Gerhard, 24966 Sörup (DE)
(74) Vertreter: Raffay & Fleck
(86) Internationale Anmeldenummer: PCT/EP2008/063227
(87) Internationale Veröffentlichungsnummer: WO 2009/047206

(56) Entgegenhaltungen:
- EP-A- 0 028 858
- EP-A- 0 029 806
- DD-A1- 140 196
- DE-A1- 3 135 493
- DE-A1- 3 912 071
- DE-A1- 3 912 072
- DE-A1- 10 318 095
- DE-C1- 4 326 688
- DE-C1- 19 705 152
- FR-A- 2 677 522
- FR-A- 2 769 797
- US-A- 2 669 749
- US-A1- 2004 170 723

## Beschreibung

### Technisches Gebiet

Die Erfindung betrifft ein Verfahren zur Herstellung von schnittfester Rohwurst in geformten Wurstlaiben gemäß dem Oberbegriff des Anspruchs 1.

### Stand der Technik

Schnittfeste Rohwurst, z.B. schnittfeste Mettwurst oder Salami, wird klassischer Weise in langgestreckten, im Wesentlichen zylindrisch geformten Därmen angeboten und entweder als Ganzes bzw. in Abschnitten oder aber aufgeschnitten zu Scheiben verkauft. Außerdem gibt es bereits zu Scheiben aufgeschnittene schnittfeste Rohwurst, die portioniert abgepackt aus dem Kühlregal erworben werden kann.

Seit einiger Zeit gibt es ein Angebot von und dabei auch eine verstärkte Nachfrage nach schnittfester Rohwurst in von der klassischen im Wesentlichen zylindrischen Form abweichender Außengestalt. Insbesondere erfreut sich schnittfeste Rohwurst in Form von "Wurstlaiben" steigender Beliebtheit, die ähnlich wie Käselaibe oder Brotlaibe geformt sind oder in ähnlicher Portionsgröße sogar andere Außenkonturen (z.B. kleeblattförmig) aufweisen und entweder portionsweise verkauft oder aber auch aufgeschnitten angeboten werden können. Dabei ist es insbesondere wünschenswert, solchermaßen geformte Wurst in unterschiedlichen Formgestalten anbieten zu können, z.B. eine Sternform in der Advents- und Weihnachtszeit, eine Herzform oder dergleichen. Insbesondere interessant sind hier also von einer Kreisform abweichende Außenkonturen.

Solchermaßen gestaltete Rohwurst kann mit bisher bekannten Herstellungsverfahren nur schwer und mit umständlichen und kostspieligen Verfahrensabläufen hergestellt werden. So ist es z.B. bekannt, Därme zu verwenden, die durch ihre Form eine bestimmte Außenkontur vorgeben und diese Därme dann mit der Rohmasse für die Wurst zu befüllen. Die so mit der Rohmasse befüllten Därme werden dann zum Fermentieren und Ausreifen gelagert bzw. weiterbehandelt, bis die schnittfeste Wurst in dem Darm in ihrer angestrebten Form verkaufs- und verzehrfertig hergestellt ist. Diese bekannte Vorgehensweise hat zum einen den Nachteil, dass die Herstellung der geformten Därme aufwendig und kostspielig ist, die Därme müssen zum anderen als Verbrauchsgüter gesondert erworben werden, sie werden z.B. aus Schnittmustern vernäht, was arbeitsaufwendig und damit kostenintensiv ist. Zum anderen ist dieses Vorgehen beschränkt hinsichtlich der erreichbaren Außenformen, insbesondere ist es hierbei ausgeschlossen, besonders scharfkantige Außenkonturen zu erzielen, wie z.B. bei einer sternförmigen Außenkontur.

Ein weiteres, im Stand der Technik bekanntes und praktiziertes Verfahren, geformte Wurstlaibe herzustellen, besteht darin, die Rohmasse in herkömmliche und nicht gesondert ausgeformte Därme zu füllen und die so gefüllten Därme dann in fixierte Formen einzupressen, vergleichbar der Formgebung mit einem Waffeleisen oder einer Prägevorrichtung. Auch dieses Verfahren ist nachteilig. Zum einen müssen nach wie vor Därme verwendet werden, die zwar nicht in einer bestimmten Art geformt sein müssen, jedoch trotzdem bei der Herstellung einen Kostenfaktor darstellen. Zudem ist die Anschaffung und auch der Betrieb der Pressvorrichtung kostenintensiv, so dass die Herstellung von geformten schnittfesten Rohwürsten nach dieser Methode ebenfalls kostenintensiv ist.

Schließlich gibt es ein weiteres Verfahren, bei dem eine vorgegebene Hohlform verwendet wird, in die die Wurstrohmasse gleichzeitig mit einem Darm, in den diese eingefüllt wird, gebracht und darin reifen gelassen wird, jedenfalls bis zum Erreichen einer gewissen Schnitt- und Standfestigkeit. Üblicherweise ist diese Hohlform dabei langgestreckt, so dass der darin enthaltene Kern in dem Darm später portionsweise aufgeschnitten und weiterverarbeitet werden kann. Auch hierbei handelt es sich um ein kostspieliges Verfahren, da der apparative Aufwand hoch und die Kosten für die Därme und die speziellen Formen ebenfalls beachtlich sind.

Aus der DE-OS-39 12 071 ist ein Verfahren bekannt, bei dem Wurstrohmasse bereitet und locker in eine mit einem Leinen ausgelegte, wasserdurchlässige Form geschüttet wird. Nach dem Einfüllen der Wurstrohmasse in die Form wird diese Form samt Inhalt einem hohen Unterdruck zur Entlüftung ausgesetzt, und die Wurstrohmasse wird in der Form mithilfe eines hydraulischen Stempels unter Druck gesetzt. Mit einem Federdeckel wird sie anschließend, solange die Wurstrohmasse in der Form verweilt, unter Druck gehalten. In der so unter Druck stehenden Form erfolgt dann die eigentliche Reifung.

In der US 2004/0170723 A1 ist beschrieben, dass Wurstrohmasse zum Erreichen einer bestimmten Form extrudiert werden kann.

### Darstellung der Erfindung

Ausgehend von diesem Stand der Technik ist es also Aufgabe der vorliegenden Erfindung, ein Verfahren anzugeben, mit welchem schnittfeste Rohwurst kostengünstig und mit wenig Aufwand in einer großen Formenvielfalt in geformten Wurstlaiben hergestellt werden kann.

Diese Aufgabe wird erfindungsgemäß gelöst durch ein Verfahren mit den Merkmalen des Patentanspruches 1. Vorteilhafte Weiterbildungen dieses Verfahrens sind in den Ansprüchen 2 bis 8 angegeben.

Erfindungsgemäß wird zunächst eine Rohmasse für die Herstellung von schnittfester Rohwurst bereitet, die zumindest zerkleinertes Fleisch und Bakterien für die Fermentation, darüber hinaus aber auch vorzugsweise Salz, Fett und Gewürze enthält. Neben diesen genannten Zutaten kann sie natürlich auch weitere, für die Herstellung von schnittfester Rohwurst übliche und an sich bekannte Inhaltsstoffe enthalten. Diese Rohmasse wird gemäß dem neu entwickelten Verfahren portioniert und unter Auslassung eines Darmes oder vergleichbaren Hüllenmaterials in eine zumindest eine umlaufende, die gewünschte Außenform des Wurstlaibes vorgebende Seitenwand aufweisende, vorzugsweise wieder verwendbare, Form gebracht, und in der Form zumindest bis zum Erhalt einer Formstabilität reifen gelassen. Entscheidender Punkt ist hier, dass die Rohmasse zum einen bereits portioniert wird, zum anderen ohne Vorsehen eines teuren Darms einfach in eine Form eingesetzt wird, die sie seitlich stabilisiert und so ein Auseinanderlaufen der Wurstmasse aus der gewünschten Form verhindert. Die Form selbst kann dabei einen Boden aufweisen, sie kann aber auch nach Art einer Plätzchenform lediglich aus der umlaufenden Seitenwand bestehen, und zusammen mit der geformten, portionierten Rohmasse auf einer Unterlage aufliegen.

Zum Erzielen der gewünschten Außenkontur wird die Wurstrohmasse erfindungsgemäß als Strang durch eine diese Außenform vorgebende, konturgebende Öffnung gepresst, portionsweise abgelängt, und die Portionen werden anschließend in die Form gegeben. Die durch die umlaufende Seitenwand vorgegebene Außenkontur der Form entspricht dabei im Wesentlichen der Kontur der Öffnung. Bei dieser Vorgehensweise wird mit anderen Worten die gewünschte Kontur durch den genannten Pressvorgang erzielt, die so geformten "Rohlinge" aus der Rohmasse entweder durch Einlegen in die Form oder durch Ablegen auf den Untergrund und Hinüberführen der Form in ihrer seitlichen Kontur geformt. Dabei kann die Form nahezu passgerecht der geformten Rohmasse entsprechen, sie kann aber auch mit einem Übermaß versehen sein, welches der frisch eingesetzten Rohmasse einen gewissen Abstand zur Wand der Form lässt, z.B. einen Abstand von etwa 1 cm. So kann die Rohmasse während des Reifungsvorganges sich seitlich ausdehnen und kontrolliert in die Form einfließen, wird dabei aber klar definiert in der gewünschten Außenkontur gehalten. Wichtig ist dabei, dass die Form in ihrer Kontur der Gestalt der Öffnung und damit der Kontur der geformten und portionierten Rohmasse entspricht.

In der Form wird die Rohmasse dann jedenfalls bis zum Erhalt einer Formstabilität reifen gelassen, anschließend kann sie ausgeformt oder zusammen mit der Form zum Verkauf angeboten werden. Dabei kann die Rohwurst in der Form stehend vollständig ausreifen, es kann allerdings auch ein Fertigreifen nach dem Ausformen in weiteren Schritten erfolgen, z.B. in Reifekammem oder dgl.

Mit dem erfindungsgemäßen Verfahren entfällt zunächst das Erfordernis, einen Darm vorzusehen, insbesondere kann auf einen Darm verzichtet werden, der die spätere Form bereits vorgibt. Dies spart Kosten bei der Herstellung und vereinfacht letztlich den Herstellungsprozess für die Rohwurst. Darüber hinaus kann mit der erfindungsgemäß zu verwendenden Form eine Vielzahl von Formen der so hergestellten Wurstlaibe realisiert werden, die insbesondere bei der Abfüllung in geformte Därme nicht zu erhalten ist.

Ferner ist die vorzugsweise wieder verwendbare Form einfach und auch kostengünstig herzustellen, sie kann z.B. ein einfaches Blechteil sein. Die Form ist dabei vorzugsweise aus einem lebensmittelechten, einfach zu reinigenden Material gefertigt, so dass sie nach einem einfachen Reinigungsvorgang unmittelbar wiederverwertet werden kann und hinsichtlich toxischer oder geschmacksbeeinträchtigender Bestandteile unbedenklich ist. Für die erfindungsgemäße Herstellung von schnittfester Rohwurst wird mit Vorteil eine Mehrzahl derartiger Formen vorgesehen sein, um gleichzeitig eine Vielzahl von geformten, schnittfesten Rohwürsten herstellen zu können. Nach dem Ausformen können diese dann bevorzugt wiederverwertet werden, um den Produktionsprozess in Gang zu halten.

Als besonders effektive und gute Möglichkeit, dem Strang seine Außenform zu geben, hat es sich erwiesen, wenn die Kontur gebende Öffnung eine zylindrisch langgestreckte Tülle ist, durch die die Rohmasse als Strang hindurchgepresst wird. Durch eine solche langgestreckte Tülle wird die Außenform der geformten Rohmasse noch einmal besser stabilisiert, so dass sie sich zunächst besser hält, als wenn die Rohmasse nur durch eine einfache Öffnung hindurch gedrückt worden wäre.

Werden die Wurstrohlinge oder die fertig gereiften Wurstlaibe vor einem Abtransport zum Verkauf noch im Rahmen des Herstellungsverfahrens ausgeformt, können sie, da sie ja keinen Darm oder sonstige Hülle aufweisen, an ihrer Oberfläche mit einer essbaren Schicht versehen werden, insbesondere einer solchen aus Kräutern und/oder Gewürzen. Dies hat zum einen positive Einflüsse auf die Optik, eine schnittfeste Rohwurst mit einem Kräutermantel wird als appetitlich aussehend empfunden, zum anderen können so auch geschmacklich interessante Ergebnisse erzielt werden.

Für die portionierte Rohmasse werden derzeit Portionsgewichte von 2000 g bis 4000 g, insbesondere von 2000 g bis 2500 g, bevorzugt. Damit werden dann fertige Würste in einer Gewichtsspanne von 1500 g bis 2900 g erhalten, die eine für einen Abschnitt weisen (wie bspw. in Scheiben) Verkauf z.B. an der Wursttheke besonders geeignete Größeneinheit bilden. Denkbar ist es auch, fertige Wurstprodukte für den Handel an den Endverbraucher mit kleineren Gewichten in Größen von z.B. 100 g bis 500 g herzustellen.

### Kurze Beschreibung der Abbildungen der Zeichnungen

Weitere Vorteile und Merkmale ergeben sich aus der nachfolgenden Gestaltung eines Ausführungsbeispiels anhand der beigefügten Figuren. Dabei zeigen:

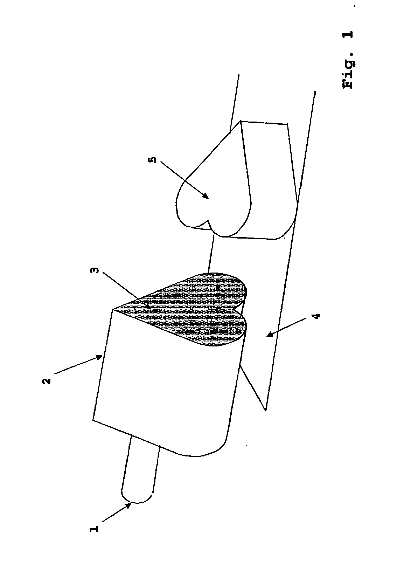

Fig. 1 bis 3 in schematischer Darstellung den Ablauf der wesentlichen Schritte bei der erfindungsgemäßen Herstellung von schnittfester Rohwurst in geformten Wurstlaiben nach dem erfindungsgemäßen Verfahren.

### Weg(e) zur Ausführung der Erfindung

In Fig. 1 ist die Herstellung von geformten Portionen der Rohmasse nach einer Ausführungsform der Erfindung gezeigt. Über ein an einer hier nicht dargestellten Presseinrichtung für fertige Rohmasse angeschlossenes Rohr 1 gelangt Wurstrohmasse 3 in einer langgestreckte Formtülle 2. Diese hat die Außenkontur eines Herzens und ist im Wesentlichen zylindrisch aufgebaut. Bei dem Pressvorgang gelangt die Wurstrohmasse 3 durch das Rohr 1 und die Formtülle 2, aus deren Ende sie als geformter Strang austritt. Von diesem geformten Strang werden Portionen 5 mit herzförmiger Außenkontur abgelängt und auf einen ebenen Untergrund 4 gelegt. Dieser ebene Untergrund 4 ist dabei aus einem lebensmitteltauglichen Material, insbesondere aus Edelstahl gefertigt.

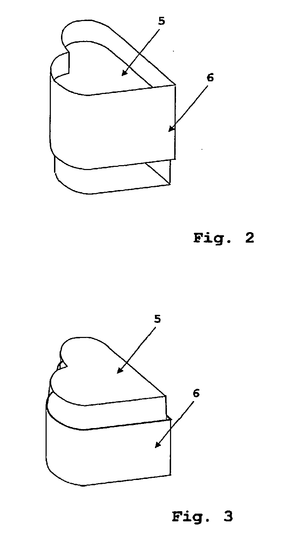

In Fig. 2 ist dann gezeigt, wie zum Erhalt der Außenkontur über die geformte Portion 5 der Rohmasse eine ebenfalls herzförmige Form 6 geführt wird, die hier allein aus einer umlaufenden Seitenwand besteht. Die Form 6 ist in diesem Ausführungsbeispiel bevorzugt wieder verwendbar und ist aus einem lebensmitteltauglichen Material gebildet, vorzugsweise Edelstahlblech.

Die letztliche Endposition, in der die geformte Portion 5 der Rohmasse dann bis zu einer Formstabilität reifen gelassen wird, ist in Fig. 3 gezeigt. Deutlich zu erkennen ist hier, dass die geformte Portion 5 jedenfalls in ihrem unteren Abschnitt durch die herzförmige Form 6 in ihrer Kontur gehalten wird, wozu die Form 6 in der Gestalt ihres innen liegenden Bereiches im Wesentlichen der Außenkontur der Portion 5 entspricht. Die Form 6 ist hier schematisch so dargestellt, dass sie in ihrem Maß der Kontur der geformten Portion 5 der Rohmasse im Wesentlichen identisch entspricht. Alternativ kann die Form 6 jedoch auch ein Übermaß aufweisen nach Art eines maßstabsgerecht vergrößerten Herzens, in welche die Rohmasse dann beim Reifen definiert und unter zwangsweiser Einhaltung der Außenkontur "einfließt".

Ist die Portion 5 jedenfalls soweit gereift, dass sie eine ausreichende Formstabilität aufweist und nicht mehr auseinanderläuft, kann sie der Form 6 entnommen und die Form 6 nach einer Reinigung wiederverwendet werden. Die Portion 5 ist dann bereits zu dem geformten Wurstlaib herangereift oder wird gegebenenfalls einer weiteren Reifung unterzogen, in deren Verlauf sie jedoch die Form nicht mehr verändert.

Der so geformte Wurstlaib kann dann ggf. noch z.B. mit einem Kräuter- oder Gewürzmantel umgeben und anschließend für den Weitertransport und den Verkauf abgepackt werden.

Die hier gezeigten Figuren sind rein schematisch und dienen lediglich der prinzipiellen Erläuterung des erfindungsgemäßen Verfahrens in zwei möglichen Ausgestaltungsvarianten. Insbesondere stellen die angegebenen Möglichkeiten für eine Verwirklichung der Erfindung nicht die einzig möglichen dar, die Erfindung in ihrer ganzen Breite ist in den nachfolgenden Patentansprüchen definiert.

Bezugszeichenliste
1. Rohr
2. Formtülle
3. Wurstrohmasse
4. Untergrund
5. Portion
6. Form

## Patentansprüche

1. Verfahren zur Herstellung von schnittfester Rohwurst in geformten Wurstlaiben, bei dem eine Rohmasse enthaltend zumindest zerkleinertes Fleisch sowie Bakterien für eine Fermentation, vorzugsweise ferner wenigstens noch Salz, Fett und Gewürze, zusammengemischt und für eine Abfüllung zur Reifung vorbereitet wird, wobei die zur Reifung vorbereitete Rohmasse portioniert und unter Auslassung eines Darmes oder vergleichbaren Hüllenmaterials in eine zumindest eine umlaufende, die gewünschte Außenform des Wurstlaibes vorgebende Seitenwand aufweisende, vorzugsweise wieder verwendbare, Form gebracht und in der Form bis zum Erhalt einer Formstabilität reifen gelassen wird, **dadurch gekennzeichnet, dass** die Rohmasse als Strang durch eine die gewünschte Außenform vorgebende, Kontur gebende Öffnung gepresst, portionsweise abgelängt und die Portionen anschließend in die Form gegeben werden, deren durch die umlaufende Seitenwand vorgegebene Außenkontur im Wesentlichen der Kontur der Öffnung entspricht.

2. Verfahren nach Anspruch 1, **dadurch gekennzeichnet, dass** die Kontur gebende Öffnung eine zylindrisch lang gestreckte Tülle ist und die Rohmasse durch diese Tülle hindurch als Strang gepresst wird.

3. Verfahren nach einem der vorhergehenden Ansprüche, **dadurch gekennzeichnet, dass** die Form mit einem Übermaß gegenüber der Kontur der geformten Rohmasse versehen wird, welche der frisch eingesetzten Rohmasse einen Abstand zur Wand der Form lässt.

4. Verfahren nach Anspruch 3, **dadurch gekennzeichnet, dass** das Übermaß so gewählt wird, dass der Abstand der frisch eingesetzten Rohmasse zur Wand der Form etwa 1 cm beträgt.

5. Verfahren nach einem der vorhergehenden Ansprüche, **dadurch gekennzeichnet, dass** nach Erhalt der Formstabilität die Wurstrohlinge oder die fertig gereiften Wurstlaibe ausgeformt werden.

6. Verfahren nach Anspruch 5, **dadurch gekennzeichnet, dass** die Wurstrohlinge nach Erhalt der Formstabilität ausgeformt und anschließend bis zum Erreichen eines fertigen Fermentationsgrades weiter reifen gelassen werden.

7. Verfahren nach einem der Ansprüche 5 oder 6, **dadurch gekennzeichnet, dass** entweder die ausgeformten Wurstrohlinge oder die fertig gereiften Wurstlaibe an ihrer Oberfläche mit einer essbaren Schicht, insbesondere einer Schicht aus Kräutern und/oder Gewürzen überzogen werden.

8. Verfahren nach einem der vorhergehenden Ansprüche, **dadurch gekennzeichnet, dass** die portionierte Rohmasse ein Portionsgewicht von 2000 g bis 4000 g, vorzugsweise von 2000 g bis 2500 g, aufweist.

## Claims

1. A process for the production of firm raw sausage in moulded sausage leaves, wherein a raw mixture containing at least ground meat as well as bacteriae for fermentation, preferably moreover salt, fat and spices, are mixed together and prepared for filling the same for curing, whereas the raw mass prepared for curing is cut in portions and, in the absence of an intestine or of a comparable sheathing material, placed into a circumferential mould, which is preferably reusable, having the requested external shape of the sausage loaf with the predetermined side wall, and left to cure until the loaf has good form stability, **characterised in that** the raw mixture prepared for curing is pressed through an opening specifying the desired outer shape, cut in portions and that said portions are placed into the mould, whose external contour, predetermined by the circumferential side wall more or less matches the contour of the opening.

2. The method of claim 1, **characterised in that** the opening providing a contour is a cylindrically elongated spout and the raw mass is pressed through said spout to obtain a strand.

3. A method according to any of the preceding claims, **characterised in that** the mould is oversized with respect to the contour of the moulded raw mass so as to leave a gap to the wall of the mould for the freshly inserted raw mass.

4. The method of claim 3, **characterised in that** said oversize is selected in such a way that the gap of the freshly inserted raw mass to the wall of the mould is approx. 1 cm.

5. A method according to any of the preceding claims, **characterised in that** once good form stability has been achieved, the sausage blanks or the fully cured sausage loaves are removed from the mould.

6. The method of claim 5, **characterised in that** the sausage loaves, once good form stability has been achieved, are removed from the mould and then are left longer to cure until a finished degree of fermentation has been reached.

7. The method according to any of the claims 5 or 6, **characterised in that** either the sausage blanks removed from the mould or the fully cured sausage loaves are coated with an edible layer, in particular a layer of herbs and/or spices on their surface.

8. A method according to any of the preceding claims, **characterised in that** the raw mass cut in portions has a portion weight of 2000 g to 4000 g, preferably of 2000 g to 2500 g.

## Revendications

1. Procédé de fabrication de saucisse brute sèche en miches de saucisse conformées, dans lequel on mélange une masse crue comprenant au moins de la viande broyée de même que des bactéries en vue de la fermentation, de préférence en ajoutant du sel, des graisses et des épices, pour préparer l'ensemble à un remplissage en vue de la maturation, dans lequel on découpe en portions la masse crue préparée en vue de la maturation et en l'absence d'un intestion ou d'un matériau d'enrobage comparable, on met ladite masse dans un moule, de préférence recyclable, circonférentiel, présentant la forme externe souhaitée de la miche de saucisse avec une paroi latérale prédéterminée, avant de la laisser maturer dans le moule jusqu'à ce que l'on obtienne une stabilité dimensionnelle, **caractérisé en ce que** l'on presse la masse crue sous forme de cordon à travers un orifice lui donnant le contour et la forme externe voulus, avant de la découper en portions et de mettre lesdites portions dans le moule, dont le contour externe prédéterminé par la paroi latérale circonférentielle correspond plus ou moins au contour de l'orifice.

2. Procédé selon la revendication 1, **caractérisé en ce que** l'ouverture conformant le contour est une filière allongée cylindriquement et que l'on comprime la masse crue à travers ladite filière pour obtenir un cordon.

3. Procédé selon l'une quelconque des revendications précédentes, **caractérisé en ce que** le moule est surdimensionné par rapport au contour de la masse crue conformées, de façon à laisser un espace entre la masse crue fraîchement introduite et la paroi du moule.

4. Procédé selon la revendication 3, **caractérisé en ce que** l'on choisit la surdimension de façon à laisser un espace entre la masse crue fraîchement introduite et la paroi du moule d'environ 1 cm.

5. Procédé selon l'une quelconque des revendications précédentes, **caractérisé en ce qu'**après obtention de la stabilité dimensionnelle on retire du moule les ébauches de saucisse crue ou les miches de saucisse parvenues à maturation.

6. Procédé selon la revendication 5, **caractérisé en ce que** l'on retire du moule les ébauches de saucisse crue après obtention de la stabilité dimensionnelle avant de les laisser encore maturer jusqu'au terme de la fermentation.

7. Procédé selon l'une des revendications 5 ou 6, **caractérisé en ce que** l'on recouvre la surface des ébauches de saucisse crue ou bien les miches de saucisse parvenues à maturation d'une couche comestible, en particulier d'une couche d'herbes et/ou d'épices.

8. Procédé selon l'une quelconque des revendications précédentes, **caractérisé en ce que** la masse crue découpée en portions présente un poids de portion de 2000g à 4000g, de préférence de 2000g à 2500g.
